# FASCICULE DE BREVET EUROPEEN

(11) **EP 0 922 668 B1**
(45) Date de publication et mention de la délivrance du brevet: **14.05.2003**
(21) Numéro de dépôt: 98403076.7
(22) Date de dépôt: 08.12.1998
(51) Int. Cl.: C01B 7/09, B01J 12/00, F23D 14/62

(54) **Dispositif pour la fabrication de bromure d'hydrogène**
Vorrichtung zur Herstellung von Wasserstoffbromid
Apparatus for the production of hydrogen bromide

(30) Priorité: 12.12.1997 FR 9715765
(43) Date de publication de la demande: 16.06.1999
(73) Titulaire: Atofina, 92800 Puteaux (FR)
(72) Inventeur: Frances, Sylvie, 38560 Champ-sur-Drac (FR); Drivon, Gilles, 69850 Saint-Martin-en-Haut (FR); Leduc, Philippe, 69440 Saint Sorlin (FR)

(56) Documents cités:
- EP-A- 0 309 838
- EP-A- 0 816 285
- DE-A- 2 738 744
- DE-C- 428 225
- FR-A- 2 365 516
- US-A- 2 070 263

## Description

L'invention concerne un dispositif pour la fabrication de bromure d'hydrogène par combustion directe du brome dans l'hydrogène.

Dans le brevet US 2070263, on décrit une méthode pour obtenir des solutions aqueuses d'acide bromhydrique qui consiste dans une première étape, à faire passer de l'hydrogène à travers du brome liquide maintenu à une température comprise entre 37°C et 42°C pour former un mélange de brome et d'hydrogène gazeux qui est brûlé à une température comprise entre 600°C et 850°C. En opérant de cette façon, il est difficile d'avoir un mélange intime de brome et d'hydrogène en des quantités stoechiométriques du fait des difficultés à pouvoir maintenir rigoureusement les températures et les équilibres thermodynamiques.

Il a également été observé, dans des dispositifs basés sur la combustion directe du brome dans l'hydrogène selon un rapport molaire H₂/Br₂ supérieur à 1, et pour lesquels on ne mentionne aucune technique de mélange des réactifs, une instabilité de la flamme de combustion qui se manifeste notamment par un fort vacillement de celle-ci en sortie du brûleur allant jusqu'à un décrochage de la flamme ("blow off") dudit brûleur ce qui peut entraîner un risque d'explosion, une qualité du bromure d'hydrogène gazeux produit fluctuante et un risque de retour de flamme.

De plus, de telles flammes s'allongent en formant des cônes présentant à la base des zones par lesquelles les réactifs sont susceptibles de s'échapper sans être brûlés.

Ceci perturbe la combustion du brome dans l'hydrogène et entraîne notamment du brome résiduel dans les gaz de combustion ce qui est de nature à provoquer une diminution importante de la durée de vie des brûleurs, à limiter la gamme de matériaux utilisables et à dégrader la qualité du bromure d'hydrogène gazeux empêchant ainsi son utilisation comme réactif pour des synthèses en aval (réactions secondaires, colorations des produits) ou bien pour la préparation de solutions pure d'acide bromhydrique.

Le brevet FR 2 365 516 propose un procédé permettant d'améliorer la stabilité de la flamme résultant de la combustion du brome dans l'hydrogène en établissant un courant hélicoïdal de brome dans une enceinte cylindrique puis à injecter l'hydrogène radicalement vers l'extérieur dans le courant hélicoïdal de brome et à alimenter en continu avec le courant hélicoïdal de brome et d'hydrogène, une flamme à proximité de l'enceinte.

Ce procédé, en utilisant un excès molaire d'hydrogène de 2,6 %, conduit à un HBr gazeux contenant 300 ppm de brome en volume, ce qui provoque encore des colorations des produits de synthèse en aval ainsi que les inconvénients mentionnés précédemment.

En outre, la complexité du brûleur entraîne un manque de flexibilité. Ainsi, notamment, dans l'éventualité où l'on désire accroître la capacité dudit dispositif, on dispose plusieurs brûleurs côte à côte dans une même enceinte. Dans un tel montage, on ne peut éviter que les flammes des différents brûleurs montés en parallèle s'interfèrent et de plus cette disposition est rédhibitoire pour obtenir une bonne répartition des réactifs. Cette configuration entraîne inévitablement un abaissement du taux de transformation du brome, complique la maîtrise du refroidissement de l'HBr formé et augmente les risques d'explosion.

Dans la demande de brevet DE 2738744, on décrit un dispositif pour réaliser la combustion du brome dans l'hydrogène qui comprend une chambre de combustion, caractérisée par sa forme en tube et une coupe transversale qui s'agrandit graduellement à partir de l'orifice du conduit de ladite chambre de combustion. Ce dispositif présente l'inconvénient d'être peu flexible à faible allure, d'être sensible au retour de flamme et de fournir une qualité médiocre d'HBr gazeux (2000 ppm en poids de brome).

On a maintenant trouvé que l'on pouvait utiliser un dispositif tel que décrit plus loin dans un procédé de fabrication de bromure d'hydrogène par combustion directe du brome dans l'hydrogène selon la réaction H₂ + Br₂ → 2HBr, ledit procédé consistant à effectuer successivement les étapes ci-après :
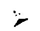 réaliser dans une enceinte un mélange intime d'hydrogène et d'un comburant,
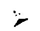 initier une flamme en sortie de ladite enceinte,
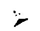 remplacer en partie ou en totalité le comburant par un courant de brome, préalablement vaporisé, avec un rapport molaire H₂/Br₂ approprié pour entretenir à la sortie de ladite enceinte et dans une zone dite de combustion une flamme stable permettant d'obtenir une combustion complète du brome dans l'hydrogène,
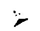 refroidir les gaz de combustion dans une zone de refroidissement, puis,
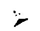 récupérer un courant gazeux de bromure d'hydrogène sous une pression au moins égale à 1 bar absolu et de préférence sous une pression comprise entre 1,3 bars absolus et 10 bars absolus et à une température au plus égale à 125°C et, de préférence, comprise entre 40°C et 125°C.

Selon la présente invention, on peut utiliser comme comburant tout mélange constitué par un gaz inerte vis-à-vis des réactifs de la réaction de formation de HBr et par une quantité d'oxygène suffisante pour pouvoir conduire à un mélange combustible avec l'hydrogène. Comme gaz inerte, on pourra utiliser l'azote. De préférence, le comburant est de l'air.

Selon la présente invention, le comburant peut être remplacé en totalité ou en partie. Dans l'éventualité où une certaine quantité de comburant est maintenue, cette quantité peut varier dans une large mesure, laquelle est fonction notamment des impuretés organiques présentes dans le courant de brome gazeux d'alimentation , des caractéristiques dimensionnelles de l'appareillage et de l'utilisation avale de l'HBr produit.

L'hydrogène et le comburant sont introduits gazeux dans l'enceinte. Lorsque la flamme est initiée, le comburant est remplacé par du brome gazeux introduit à une température supérieure à sa température d'ébullition et, de préférence, comprise entre 100°C et 160°C.

L'hydrogène sera avantageusement préchauffé à une température au plus égale à 150°C et, de préférence, comprise entre 60°C et 100°C.

La pression dans l'enceinte est au moins égale à 1 bar absolu, de préférence supérieure à 1,3 bars absolus et, plus encore comprise entre 1,8 bars absolus et 10 bars absolus.

On ne sortirait pas du cadre de l'invention si la pression était légèrement inférieure à la pression atmosphérique.

Le rapport molaire H₂/Br₂ est supérieur à 1. De préférence, le rapport molaire H₂/Br₂ est supérieur à 1 et inférieur à 1,5. La demanderesse a constaté que dans les conditions réactionnelles de la présente invention, le brome est consommé instantanément d'une façon quasi complète.

La réaction du brome et de l'hydrogène s'accompagne d'un dégagement de chaleur (12,3 Kcalories par mole de HBr gazeux formé) qui élève à plus de 1 600°C la température de la flamme de combustion dans des conditions adiabatiques.

Selon la présente invention, le refroidissement du bromure d'hydrogène formé commence dès sa formation dans la zone de combustion en fonction de l'excès de l'hydrogène et du refroidissement de la chambre de combustion, puis ensuite se poursuit dans une zone de refroidissement constituée d'une façon telle que la température baisse graduellement dans ces zones et avoisine 60°C, en sortie de la zone de refroidissement et, de préférence, est comprise entre 40°C et 125°C. Cette température de sortie peut être adaptée en fonction des contraintes des dispositifs en aval. La pression régnante dans ladite zone de refroidissement est, de préférence, comprise entre 1,3 bars absolus et 10 bars absolus.

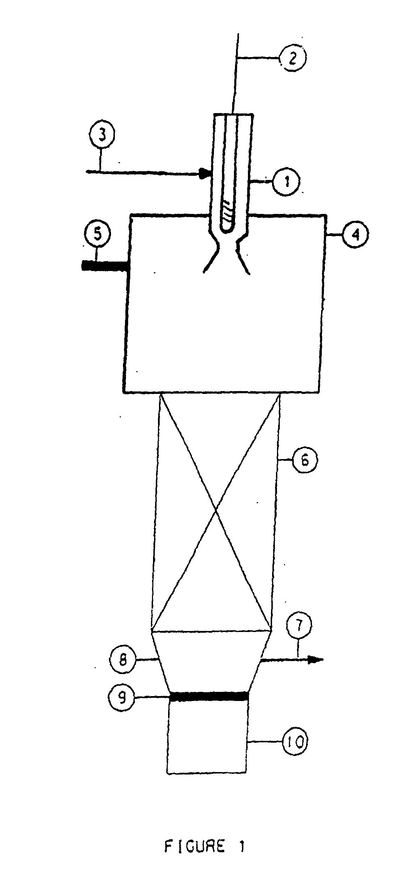

Le dispositif, selon la présente invention, tel que représenté schématiquement sur la figure 1, comprend successivement :
- un brûleur (1) comprenant des moyens (2) pour introduire, le brome et/ou le comburant, des moyens (3) pour introduire l'hydrogène et des moyens pour mettre en contact lesdits réactifs,
- une chambre de combustion (4),
- des moyens (5) pour initier une flamme,
- des moyens (6) pour refroidir les gaz de combustion (HBr),
- des moyens d'évacuation (7 et 8) des gaz de combustion (HBr), et
- des organes de sécurité (9) et (10).

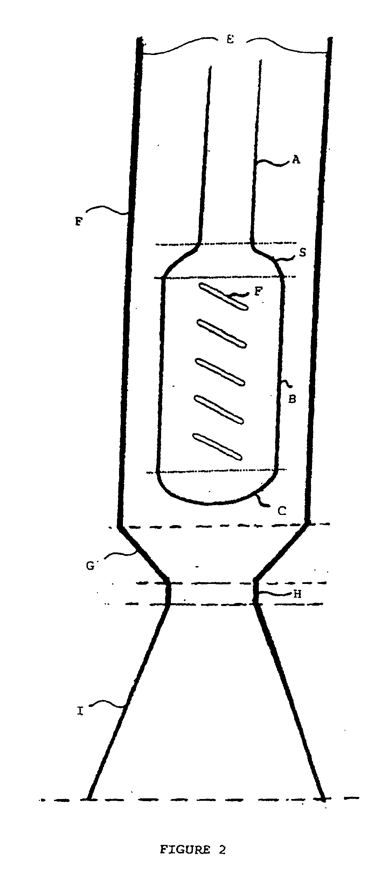

Selon la présente invention, le brûleur (1) est constitué d'une enceinte (E) verticale à l'intérieur de laquelle est placé un tube cylindrique vertical, tel que représenté sur la figure 2, constitué de :
- une partie supérieure cylindrique (A) ouverte de longueur L1 et de diamètre D1,
- une partie inférieure cylindrique (B) de longueur L2 et de diamètre D2, avec D2>D1, laquelle partie inférieure (B) est terminée par une calotte sphérique (C). La partie (B) est munie d'orifices de préférence inclinés (F).

Les parties (A) et (B) sont réunies par un segment sphérique (S).

L'enceinte (E) est constituée de 4 zones successives :
- une zone cylindrique (F) de hauteur h1 et de diamètre D3,
- une zone tronconique convergente (G) de hauteur h2 et de diamètres respectivement D3 et D4 avec D3 > D4,
- une zone cylindrique (H) de hauteur h2 et de diamètre D4,
- une zone tronconique divergente (I), de hauteur H4 et de diamètres respectivement D4 et D5 avec D4<D5, h2<h4 et D5 étant avantageusement supérieur à D3.

Les valeurs L1, L2, D1, D2, D3, D4, D5, h1, h2, h3, h4 et le nombre d'orifices (F) déterminent la flexibilité du dispositif. L'homme de l'art adaptera ces valeurs à la capacité requise et aux contraintes d'exploitation de l'installation.

Selon la présente invention, le brome et/ou le comburant son introduits par (2) directement dans le tube vertical à la partie supérieure de la partie cylindrique (A) et l'hydrogène est introduit par (3), de préférence d'une façon perpendiculaire au tube vertical et à l'intérieur du volume constitué par l'enceinte (E) et ledit tube vertical.

L'enceinte, ainsi que le tube vertical peuvent être constitués en matériaux réfractaires et inertes vis-à-vis des réactifs tels que silice ou quartz, ou bien encore en un métal ayant une résistance adaptée à la qualité des réactifs tel que le nickel.

Selon la présente invention, la base du brûleur émerge dans la chambre de combustion (4) qui est avantageusement refroidie.

Cette chambre de combustion est munie de moyens (5) pour initier la flamme. La flamme peut être initiée par un organe d'allumage apportant l'énergie nécessaire au démarrage. Ce peut être un petit brûleur auxiliaire par l'intermédiaire d'un hublot (non représenté sur la figure 1).

Cette chambre de combustion peut être constituée de graphite imprégné avec des résines phénoliques, des polymères fluorés ou du carbone avec une double enveloppe externe en acier dans laquelle peut circuler un fluide caloporteur.

Selon la présente invention, le graphite imprégné doit posséder des caractéristiques de résistance thermique, mécanique et chimique adaptées au procédé.

Cette chambre de combustion peut également comprendre un chemisage intérieur sur tout ou partie de la hauteur de ladite chambre. Ce chemisage peut être en quartz, en céramique ou tout autre matériau qui permet la réflexion des émissions rayonnantes de la flamme et qui favorise le confinement de la chaleur au sein de la chambre de combustion.

La zone de refroidissement (6) selon la présente invention est constituée par une enveloppe en acier dans laquelle se trouvent empilés des blocs en graphite imprégné.

Selon la présente invention, ces blocs, sont constitués de canaux axiaux dans lesquels les gaz de combustion circulent, et de canaux radiaux dans lesquels circule de l'eau ou une saumure froide ou un fluide caloporteur.

Selon la présente invention, le nombre de blocs à utiliser peut varier dans une large mesure. Il est calculé de façon à ce que la température des gaz de combustion arrivant dans le pot inférieur (8) soit au plus égale à 125°C et, de préférence comprise entre 40°C et 60°C.

Selon la présente invention, les moyens d'évacuation (8) des gaz de combustion (HBr) sont constitués par un pot inférieur, notamment en PVDF fretté avec une enveloppe externe en acier.

Ce pot est équipé d'une sortie latérale (7) pour le gaz produit et d'organes de sécurité tel qu'un disque de rupture (9) qui est en liaison avec un pare-éclats (10).

Selon la présente invention, la chambre de combustion est avantageusement équipée d'un ou plusieurs hublots situés le plus proche de la flamme.

Ces hublots peuvent notamment permettre le contrôle visuel ou instrumenté de la flamme et l'introduction des moyens d'allumage.

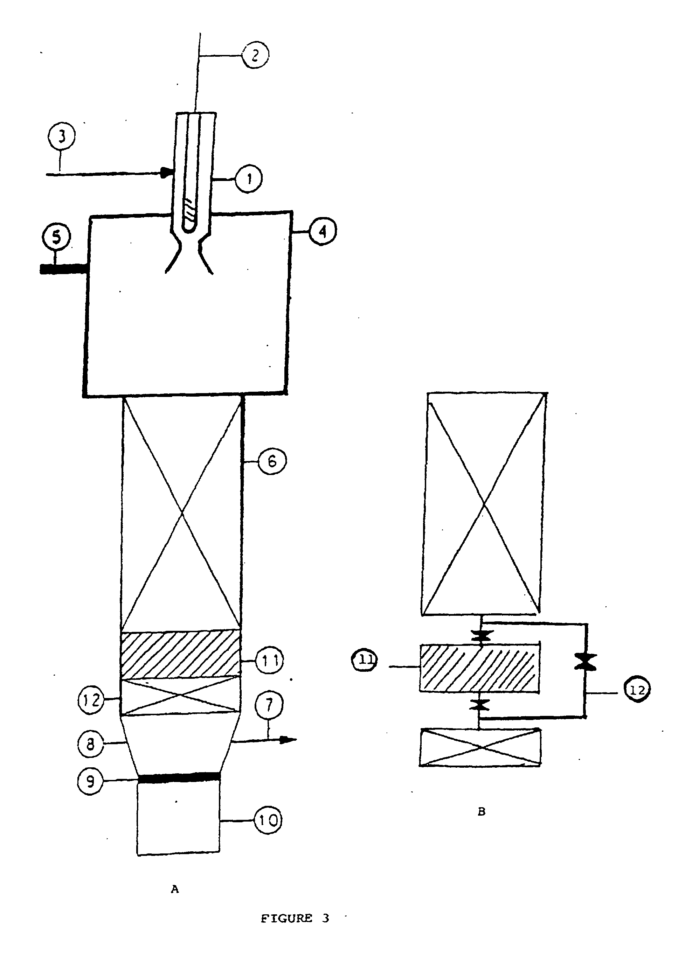

Ce procédé conforme à l'invention peut également être mis en oeuvre au moyen d'un dispositif particulier tel que représenté schématiquement sur les figures 3A et 3B.

Dans ce dispositif, un étage de finition (11) pouvant être muni d'un circuit de contournement (12) (figure 3B) a été intercalé au sein de la zone de refroidissement (6).

Cet étage de finition est constitué par une enveloppe en acier vitrifié dans laquelle se trouve une charge catalytique tel que du charbon actif.

Selon cette variante, la température des gaz entrant dans cet étage de finition peut varier dans une large mesure. Elle est au plus égale à 300°C et, de préférence, comprise entre 200°C et 300°C.

Ce procédé conforme à invention présente une grande flexibilité, tout en assurant une grande sûreté de fonctionnement et une bonne opérabilité.

Pour un dimensionnement donné de la chambre de combustion et de la zone de refroidissement on peut faire varier dans une grande mesure les débits d'entrée des réactifs. Ceci est permis par le fait que l'on peut changer aisément le brûleur.

Ce procédé présente aussi l'avantage de conduire à un bromure d'hydrogène très pur, ayant une teneur pondérale en brome au plus égale à 100 ppm, à une pression suffisante, ce qui permet de l'utiliser soit comme réactif en synthèse organique, soit pour préparer des solutions HBr pur sans l'utilisation de moyens coûteux de recompression et de purification.

En outre, ce procédé permet d'obtenir des évents gazeux sans brome.

L'exemple qui suit illustre l'invention.

On utilise un générateur tel que représenté sur la figure 1, comprenant :
- un brûleur, tel que schématisé sur la figure 2 constitué par une enceinte verticale en quartz (E) à l'intérieur de laquelle se trouve un tube vertical,
- une chambre de combustion de diamètre égal à 250 mm constituée par du graphite imprégné carbone et de hauteur égale à 1200 mm.

Cette chambre est refroidie par de l'eau de température d'entrée égale à 28°C,
- une zone de refroidissement munie de 5 blocs en graphite imprégné GRAPHYLOR® type HB commercialisé par la Société Carbone Lorraine refroidie par une circulation d'eau,
- un pot (8) en PVDF fretté,
- une évacuation (7),
- un disque de rupture (9) et un pare-éclats (10).

Le générateur est équipé de deux hublots, disposés sur les parois de la chambre de combustion au niveau de la partie basse du brûleur.

Le dimensionnement des équipement précédemment mentionnés ont été déterminés pour produire par jour une quantité de bromure d'hydrogène pur allant de 1,4 à 9,6 tonnes.

En régime établi, on alimente le brûleur avec les réactifs ci-après :
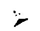 Hydrogène :
   - débit : 5 kg/h
   - pression : 3 bars absolus
   - température : 80°C

La flamme est initiée au moyen du dispositif (5) constitué par un brûleur pilote H2/air projetant un flamme par l'un des 2 hublots.

La flamme initiée, on substitue le courant d'air par un courant de brome gazeux :
- débit : 395 kg/h
- pression : 3 bars
- température : 140°C
- teneur en eau : <0,01 %
- teneur en chlore : <0,05 %

On peut observer par le hublot l'aspect de la flamme. Une cellule adaptée sur l'un des hublots permet de nous indiquer avec précision les proportions des réactifs de combustion (couleur de la flamme) et par suite nous permet d'ajuster les débits.

Le générateur fonctionne en continu produisant 400 kg/h d'HBr gazeux dont au moins 399,9 kg HBr pur sortant en (7) à 40°C et sous une pression de 1,8 bars absolus. Le bromure d'hydrogène obtenu est non coloré et contient en moyenne moins de 100 mg de brome par kg de HBr.

## Revendications

1. Dispositif pour la fabrication de bromure d'hydrogène par combustion directe du brome dans l'hydrogène, **caractérisé en ce qu'**il comprend successivement
- un brûleur (1) comprenant des moyens (2) pour introduire le brome et/ou le comburant, des moyens (3) pour introduire l'hydrogène et des moyens pour mettre en contact lesdits réactifs, ledit brûleur étant constitué par une enceinte verticale (E) à l'intérieur de laquelle est placé un tube cylindrique vertical constitué d'une partie supérieure cylindrique (A) ouverte de longueur L1 et de diamètre D1 reliée à une partie inférieure cylindrique (B) de diamètre D2, avec D2>D1, par un segment sphérique (S), laquelle partie inférieure (B) comprend des orifices inclinés (F) et est terminée par une calotte sphérique (C), ladite enceinte comprenant 4 zones successives :
- une zone cylindrique (F) de hauteur h1 et de diamètre D3,
- une zone tronconique divergente (G) de hauteur h2 et de diamètres respectivement D3 et D4 avec D3>D4,
- une zone cylindrique (H) de hauteur h3 et de diamètre D4, et
- une zone tronconique divergente (I), de hauteur h4 et de diamètres respectivement D4 et D5 avec D4<D5, h2<h4 et D5>D3 ;
- une chambre de combustion (4),
- des moyens (5) pour initier une flamme,
- des moyens (6) pour refroidir les gaz de combustion,
- des moyens d'évacuation (7 et 8) des gaz de combustion, et
- des organes de sécurité (9) et (10).

2. Dispositif selon la revendication 1, **caractérisé en ce que** la base du brûleur émerge dans la chambre de combustion (4).

3. Dispositif selon la revendication 1, **caractérisé en ce que** la chambre de combustion (4) est constituée de graphite imprégné avec du carbone.

4. Dispositif selon la revendication 1, **caractérisé en ce que** la chambre de combustion comprend sur tout ou partie de la hauteur, un chemisage intérieur.

5. Dispositif selon la revendication 1, **caractérisé en ce que** la zone de refroidissement est constituée par une enveloppe en acier dans laquelle se trouve empilés des blocs en graphite imprégné, lesdits blocs sont constitués de canaux axiaux dans lesquels les gaz de combustion circulent et de canaux radiaux dans lesquels circule de l'eau.

6. Dispositif selon la revendication 1, **caractérisé en ce qu'**un étage de finition, constitué par une double-enveloppe en acier dans laquelle se trouve une charge catalytique, est intercalé au sein de la zone de refroidissement (6).

7. Dispositif selon la revendication 7, **caractérisé en ce que** la charge catalytique est du charbon actif.

8. Dispositif selon la revendication 7, **caractérisé en ce que** la température des gaz entrant dans l'étage de finition est, au plus égale, à 300°C.

9. Utilisation du dispositif selon l'une des revendications 1 à 8 pour mettre en oeuvre un procédé de fabrication de bromure d'hydrogène par combustion directe du brome dans l'hydrogène, ledit procédé consistant à effectuer successivement les étapes ci-après :
- réaliser dans une enceinte un mélange intime d'hydrogène et d'un comburant,
- initier une flamme en sortie de ladite enceinte,
- remplacer en partie ou en totalité le comburant par un courant de brome, préalablement vaporisé, avec un rapport molaire H₂/Br₂ approprié pour entretenir à la sortie de ladite enceinte et dans une zone dite de combustion une flamme stable, permettant d'obtenir une combustion complète du brome dans l'hydrogène,
- refroidir les gaz de combustion dans une zone de refroidissement, puis,
- récupérer un courant gazeux de bromure d'hydrogène sous une pression au moins égale à un bar absolu et à une température au plus égale à 125°C et, de préférence comprise entre 40°C et 125°C.

10. Utilisation selon la revendication 9, **caractérisée en ce que** le comburant est remplacé en totalité par un courant de brome.

11. Utilisation selon la revendication 9, **caractérisée en ce que** le comburant est remplacé en partie par un courant de brome.

12. Utilisation selon la revendication 9, **caractérisée en ce que** le comburant est de l'air.

13. Utilisation selon la revendication 9, **caractérisée en ce que** la pression dans l'enceinte est au moins égale à 1 bar absolu, de préférence supérieure à 1,3 bars absolus et, plus encore, comprise entre 1,8 bars absolus et 10 bars absolus.

14. Utilisation selon la revendication 9, **caractérisée en ce que** le rapport molaire H₂/Br₂ est supérieur à 1 et inférieur à 1,5.

15. Utilisation selon la revendication 9, **caractérisée en ce que** la pression régnante dans la zone de refroidissement est au moins égale à 1,3 bars absolus et, de préférence comprise entre 1,3 bars absolus et 10 bars absolus.

16. Utilisation selon la revendication 9, **caractérisée en ce que** l'on récupère un courant gazeux de bromure d'hydrogène sous une pression comprise entre 1,3 bars absolus et 10 bars absolus et à une pression comprise entre 40°C et 60°C.

## Claims

1. Device for the manufacture of hydrogen bromide by direct combustion of bromine in hydrogen, **characterized in that** it successively comprises:
- a burner (1) comprising means (2) for introducing the bromine and/or the oxidant, means (3) for introducing the hydrogen and means for placing the said reactants in contact, the said burner consisting of a vertical chamber (E) inside which is placed a vertical cylindrical tube which consists of an open cylindrical upper part (A) of length L1 and of diameter D1 connected to a cylindrical lower part (B) of diameter D2, with D2 > D1, by a spherical segment (S), this lower part (B) comprising inclined orifices (F) and being terminated with a spherical cap (C), the said chamber comprising 4 successive zones:
- a cylindrical zone (F) of height h1 and of diameter D3,
- a divergent frustoconical zone (G) of height h2 and of diameters D3 and D4 respectively, with D3 > D4,
- a cylindrical zone (H) of height h3 and of diameter D4, and
- a divergent frustoconical zone (I) of height h4 and of diameters D4 and D5 respectively, with D4 < D5, h2 < h4 and D5 > D3;
- a combustion chamber (4),
- means (5) for starting a flame,
- means (6) for cooling the combustion gases,
- means (7 and 8) for evacuating the combustion gases, and
- safety members (9) and (10).

2. Device according to Claim 1, **characterized in that** the base of the burner emerges in the combustion chamber (4).

3. Device according to Claim 1, **characterized in that** the combustion chamber (4) consists of graphite impregnated with carbon.

4. Device according to Claim 1, **characterized in that** the combustion chamber comprises an inner sleeve along all or part of its height.

5. Device according to Claim 1, **characterized in that** the cooling zone consists of a steel jacket in which are piled blocks of impregnated graphite, the said blocks consisting of axial channels in which the combustion gases circulate and radial channels in which water circulates.

6. Device according to Claim 1, **characterized in that** a finishing stage, consisting of a steel jacket in which there is a catalytic charge, is inserted within the cooling zone (6).

7. Device according to Claim 6, **characterized in that** the catalytic charge is active charcoal.

8. Device according to Claim 7, **characterized in that** the temperature of the gases entering the finishing stage is not more than 300°C.

9. Use of the device according to one of Claims 1 to 8 for implementing a process for manufacturing hydrogen bromide by direct combustion of bromine in hydrogen, the said process consisting in carrying out the following steps successively:
- intimately mixing hydrogen and an oxidant in a chamber,
- starting a flame at the outlet of the said chamber,
- replacing all or part of the oxidant by a stream of prevaporized bromine, in an H₂/Br₂ molar ratio which is suitable for maintaining a stable flame at the outlet of the said chamber and in a so-called combustion zone, thereby making it possible to obtain complete combustion of the bromine in the hydrogen,
- cooling the combustion gases in a cooling zone, then
- recovering a flow of hydrogen bromide gas under a pressure at least equal to one bar absolute and at a temperature not above 125°C and preferably between 40°C and 125°C.

10. Use according to Claim 9, **characterized in that** the oxidant is totally replaced by a stream of bromine.

11. Use according to Claim 9, **characterized in that** the oxidant is partially replaced by a stream of bromine.

12. Use according to Claim 9, **characterized in that** the oxidant is air.

13. Use according to Claim 9, **characterized in that** the pressure in the chamber is at least equal to 1 bar absolute, preferably greater than 1.3 bar absolute and even more preferably between 1.8 bar absolute and 10 bar absolute.

14. Use according to Claim 9, **characterized in that** the H₂/Br₂ molar ratio is greater than 1 and less than 1.5.

15. Use according to Claim 9, **characterized in that** the pressure prevailing in the cooling zone is at least equal to 1.3 bar absolute and preferably between 1.3 bar absolute and 10 bar absolute.

16. Use according to Claim 9, **characterized in that** a stream of hydrogen bromide gas under a pressure of between 1.3 bar absolute and 10 bar absolute and at a temperature of between 40°C and 60°C is recovered.

## Patentansprüche

1. Vorrichtung zur Herstellung von Bromwasserstoff durch direkte Verbrennung von Brom in Wasserstoff, **dadurch gekennzeichnet, daß** die Vorrichtung aufeinanderfolgend aufweist:
- einen Brenner (1), aufweisend Mittel (2) zur Einführung von Brom und/oder einem Sauerstoffträger, Mittel (3) zur Einführung von Wasserstoff und Mittel zum Inkontaktbringen der vorgenannten Reaktanden, wobei der Brenner aus einer senkrechten Einfassung (E) besteht, in deren Inneren ein senkrechtes zylindrisches Rohr angeordnet ist, das aus einem offenen, zylindrischen oberen Teil (A) mit einer Länge L1 und einem Durchmesser D1, der über ein rundes Segment (S) mit einem zylindrischen unteren Teil (B) mit einem Durchmesser D2 mit D2 > D1 verbunden ist, besteht, wobei der untere Teil (B) geneigte Öffnungen (F) aufweist und über eine runde Kalotte (C) abgeschlossen ist, wobei die Einfassung vier aufeinanderfolgende Zonen umfaßt:
- eine zylindrische Zone (F) mit einer Höhe hl und einem Durchmesser D3,
- eine auseinandergehende kegelstumpfartige Zone (G) mit einer Höhe h2 und Durchmessern D3 bzw. D4 mit D3 > D4,
- eine zylindrische Zone (H) mit einer Höhe h3 und einem Durchmesser D4 und
- eine auseinandergehende kegelstumpfartige Zone (I) mit einer Höhe h4 und Durchmessern D4 bzw. D5 mit D4 < D5, h2 < h4 und D5 > D3;
- eine Verbrennungskammer (4),
- Mittel (5) zum Starten einer Flamme,
- Mittel (6) zum Abkühlen der Verbrennungsgase,
- Mittel (7 und 8) zur Entfernung der Verbrennungsgase und
- Sicherheitsorgane (9) und (10).

2. Vorrichtung nach Anspruch 1, **dadurch gekennzeichnet, daß** die Basis des Brenners in die Verbrennungskammer (4) eintaucht.

3. Vorrichtung nach Anspruch 1, **dadurch gekennzeichnet, daß** die Verbrennungskammer (4) aus mit Kohlenstoff imprägniertem Graphit besteht.

4. Vorrichtung nach Anspruch 1, **dadurch gekennzeichnet, daß** die Verbrennungskammer über die gesamte oder einen Teil der Höhe eine innere Auskleidung aufweist.

5. Vorrichtung nach Anspruch 1, **dadurch gekennzeichnet, daß** die Abkühlungszone aus einer Stahlummantelung besteht, in der gestapelt bzw. geschichtet imprägnierte Blöcke aus Graphit befindlich sind, wobei die Blökke aus axialen Kanälen, in denen die Verbrennungsgase zirkulieren, und radialen Kanälen, in denen Wasser zirkuliert, bestehen.

6. Vorrichtung nach Anspruch 1, **dadurch gekennzeichnet, daß** eine Beendigungsstufe, die aus einer doppelten Stahlummantelung besteht, in der sich eine katalytische Beladung befindet, in der Abkühlungszone (6) zwischengeschaltet ist.

7. Vorrichtung nach Anspruch 6, **dadurch gekennzeichnet, daß** die katalytische Beladung Aktivkohle ist.

8. Vorrichtung nach Anspruch 7, **dadurch gekennzeichnet, daß** die Temperatur der Gase, die in die Beendigungsstufe eintreten, höchstens 300 °C beträgt.

9. Verwendung der Vorrichtung nach einem der Ansprüche 1 bis 8 zur Durchführung eines Verfahrens zur Herstellung von Bromwasserstoff mittels direkter Verbrennung von Brom in Wasserstoff, wobei das Verfahren darin besteht, aufeinanderfolgend die nachstehenden Verfahrensschritte durchzuführen:
- Herstellung einer innigen Mischung aus Wasserstoff und einem Sauerstoffträger in einer abgeschlossenen Umgebung (Einfassung),
- Zünden einer Flamme am Ausgang der abgeschlossenen Umgebung,
- Ersetzen eines Teils oder der Gesamtheit des Sauerstoffträgers durch einen zuvor verdampften Bromstrom mit einem geeigneten H₂/Br₂-Molverhältnis, um am Ausgang der abgeschlossenen Umgebung und in einer sogenannten Verbrennungszone eine stabile Flamme aufrechtzuerhalten, was es ermöglicht, eine vollständige Verbrennung des Broms in dem Wasserstoff zu erreichen,
- Abkühlen der Verbrennungsgase in einer Abkühlungszone, dann
- Erhalt eines Bromwasserstoffgasstroms unter einem Druck von mindestens einem bar absolut und einer Temperatur von höchstens 125 °C, vorzugsweise 40 bis 125 °C.

10. Verwendung nach Anspruch 9, **dadurch gekennzeichnet, daß** der Sauerstoffträger insgesamt durch einen Bromstrom ersetzt wird.

11. Verwendung nach Anspruch 9, **dadurch gekennzeichnet, daß** der Sauerstoffträger teilweise durch einen Bromstrom ersetzt wird.

12. Verwendung nach Anspruch 9, **dadurch gekennzeichnet, daß** der Sauerstoffträger Luft ist.

13. Verwendung nach Anspruch 9, **dadurch gekennzeichnet, daß** der Druck in dem abgeschlossenen Behältnis mindestens 1 bar absolut, vorzugsweise mehr als 1,3 bar absolut, besonders bevorzugt 1,3 bar absolut bis 10 bar absolut, beträgt.

14. Verwendung nach Anspruch 9, **dadurch gekennzeichnet, daß** das H₂/Br₂-Molverhältnis größer als 1 und kleiner als 1,5 ist.

15. Verwendung nach Anspruch 9, **dadurch gekennzeichnet, daß** der Druck in der Abkühlzone mindestens 1,3 bar absolut, vorzugsweise 1,3 bar absolut bis 10 bar absolut, beträgt.

16. Verwendung nach Anspruch 9, **dadurch gekennzeichnet, daß** man einen Bromwasserstoffgasstrom unter einem Druck zwischen 1,3 bar absolut und 10 bar absolut und bei einer Temperatur zwischen 40 und 60 °C erhält.
